# EUROPÄISCHE PATENTSCHRIFT

(11) **EP 1 842 206 B1**
(45) Veröffentlichungstag und Bekanntmachung des Hinweises auf die Patenterteilung: **30.11.2011**
(21) Anmeldenummer: 06700502.5
(22) Anmeldetag: 18.01.2006
(51) Int. Cl.: G21F 3/00

(54) **STRAHLENSCHUTZTOR**
RADIATION-SHIELDED DOOR
PORTE DE PROTECTION CONTRE LE RAYONNEMENT

(30) Priorität: 26.01.2005 DE 102005016632
(43) Veröffentlichungstag der Anmeldung: 10.10.2007
(73) Patentinhaber: Smiths Heimann GmbH, 65205 Wiesbaden (DE)
(72) Erfinder: STREYL, Andreas, 55444 Seiberbach (DE)
(74) Vertreter: Dietrich, Barbara
(86) Internationale Anmeldenummer: PCT/EP2006/000397
(87) Internationale Veröffentlichungsnummer: WO 2006/079472

(56) Entgegenhaltungen:
- EP-A- 1 271 556
- DE-U1- 20 112 678
- GB-A- 1 072 642
- US-A- 2 718 598
- US-A- 4 020 346
- DATABASE WPI Section PQ, Week 199220 Derwent Publications Ltd., London, GB; Class Q35, AN 1992-165394 XP002370488 -& SU 1 668 243 A1 (ARKHANGELSK FORESTRY INST) 7. August 1991 (1991-08-07)
- PATENT ABSTRACTS OF JAPAN Bd. 1999, Nr. 11, 30. September 1999 (1999-09-30) & JP 11 160487 A (ISHIKAWAJIMA HARIMA HEAVY IND CO LTD), 18. Juni 1999 (1999-06-18)

## Beschreibung

Die vorliegende Erfindung betrifft eine Röntgenprüfanlage.

Im Rahmen der nichtinvasiven Inspektion von Objekten wie Gepäckstücken oder Paketen werden oftmals Röntgenprüfanlagen eingesetzt. Dabei werden die zu untersuchenden Objekte üblicherweise mittels einer Fördervorrichtung durch einen Strahlentunnel befördert. Dabei ist wichtig, dass keine oder nur sehr wenig Strahlung aus dem Strahlentunnel austritt. Aus dem Stand der Technik (siehe zum Beispiel DE 101 31 407 A1) ist bekannt, den Ein- und Ausgang des Tunnels mittels Strahlenschutzvorhängen aus Blei zu verschließen. Der Nachteil dieser Lösung besteht darin, dass der Vorhang über das zu untersuchende Objekt streift und dieses hängenbleiben oder umgeworfen werden kann. Ein weiterer Nachteil besteht darin, dass der Vorhang durch das Objekt beiseite geschoben wird und daher nicht mehr die gesamte Öffnung des Tunnels abdeckt.

Röntgenprüfgeräte, deren Strahlentunnel am Eingang und am Ausgang mit Strahlenschutzvorrichtungen versehen sind, sind beispielsweise aus JP11160487, US4020346 oder EP1271556 bekannt. DE20102777U und DE6753087U zeigen Verschattungseinrichtungen, deren Lamellen an den Stirnseiten nach Art einer Nürnberger Schere verbunden sind.

Ausgehend vom Stand der Technik ist es die Aufgabe der vorliegenden Erfindung, einen verbesserten Strahlenschutzverschluss anzugeben.

Gelöst wird diese Aufgabe durch ein Strahlenschutztor, bestehend aus mindestens zwei das Tor bildenden, beweglich angeordneten, Strahlung absorbierenden Lamellen, deren Stirnseiten Hebel darstellen, die nach Art einer Nürnberger Schere verbunden sind.

Grundsätzlich besteht eine Nürnberger Schere aus mehreren Einzelscheren, die aus jeweils zwei über Scherengelenke verbundenen Hebeln bestehen. Die Einzelscheren sind über Gelenke an den Enden der Hebel miteinander verbunden. Dieser Aufbau lässt eine translatorische Bewegung der Scherengelenke in einer Richtung zu, welche aufgrund der Hebelwirkung gleichzeitig mit einer ziehharmonikaähnlichen Verlängerung oder Stauchung der gesamten Nürnberger Schere einhergeht. Gleichzeitig erfolgt eine Rotation der Hebel um maximal 90 Grad um die Scherengelenke. Wird jeweils der eine Hebel jeder Einzelschere durch die Stirnseite einer Lamelle gebildet, so erhält man die Funktionalität eines Tores. In der kontrahierten Endposition bilden die Lamellen ein kompaktes Paket, in der anderen Endposition eine geschlossene Fläche.

Zur Erzielung einer Strahlenschutzwirkung müssen die Lamellen eine strahlungshemmende Wirkung aufweisen. Dies lässt sich dadurch erreichen, dass die Lamellen aus metallischem Trägermaterial bestehen und mit Blei beschichtet sind. Gemäß einer weiteren Ausgestaltungsform bestehen die Lamellen aus nichtmetallischem Trägermaterial und sind mit Blei beklebt. Zur Gewichtsreduktion kann das Trägermaterial mit Ausnehmungen versehen sein. Weiterhin ist es möglich, dass die Lamellen aus stark strahlenabsorbierendem Material, wie z. B. Densimed bestehen.

In vorteilhafter Weise kann das Tor automatisch verfahren werden. Dies hat den Vorteil, dass sich das Tor beispielsweise bei Stromausfall selbsttätig schließt. Dazu kann eine motorische, insbesondere eine elektrische oder pneumatische, Verstelleinheit zum Öffnen und Schließen des Tores vorgesehen sein. Selbstverständlich ist auch eine manuelle Bedienung des Tores möglich.

Weiterhin kann vorgesehen sein, dass das Tor durch die Verstelleinheit oder manuell öffenbar und durch die Schwerkraft schließbar ist, wobei das Tor in geöffneter Position durch einen Magnet und/oder eine mechanische Haltevorrichtung feststellbar ist.

Weiterhin kann das Strahlenschutztor mit die Größe des zu prüfenden Objekts erfassenden Sensoren ausgerüstet sein. Bei diesen Sensoren kann es sich beispielsweise um Lichtschranken handeln. Anhand dieser Daten kann das aufgrund seiner Konstruktion stufenlos verfahrbare Strahlenschutztor gerade so weit geöffnet werden, dass das zu untersuchende Objekt ungehindert hindurchtransportiert werden kann. Eine genaue Steuerung des Tores lässt sich dadurch erreichen, dass den Öffnungsgrad des Tores erfassende Sensoren installiert werden.

In einer weiteren vorteilhaften Ausgestaltung der vorliegenden Erfindung sind ein oder mehrere Bleilappen an mindestens einer Lamelle angebracht. Diese sind so plaziert, dass sie im geschlossenen Zustand des Tores den Übergangsbereich zwischen zwei Lamellen abdecken und somit eine noch bessere Absorption der Strahlung erfolgt. Dies ermöglicht ein noch besseres Verschließen der Tunnelöffnung. Die Verwendung eines Bleilappens bietet sich insbesondere an der untersten Lamelle an, um die Abschirmung auch im Bereich etwaiger Transportvorrichtungen für die zu untersuchenden Objekte zu gewährleisten. Ein guter Strahlenschutz bei gleichzeitiger Flexibilität der Lappen ergibt sich beispielsweise bei Verwendung von Gummi-Bleilappen.

Das erfindungsgemäße Strahlenschutztor bietet eine Reihe weiterer Vorteile gegenüber dem Stand der Technik. So ist beispielsweise ein Sicherungsmechanismus möglich, bei dem die Strahlung erst dann eingeschaltet werden kann, wenn das Tor komplett geschlossen ist. Weiterhin wird durch das Strahlungsschutztor verhindert, dass während des Betriebes in den Strahlungstunnel hineingegriffen oder dieser gar betreten wird. Durch mehrere, hintereinander angeordnete Strahlenschutztore kann ein Schleusenbetrieb aufgebaut werden, mit dem die Strahlensicherheit noch weiter erhöht werden kann. Außerdem lässt sich mittels der Strahlenschutztore eine sichere Vereinzelung der zu untersuchenden Objekte realisieren.

Die Einsatzmöglichkeiten des Strahlenschutztores sind nicht auf Röntgenprüfanlagen beschränkt. Vielmehr können sie auch beispielsweise an Zugängen zu Gebäuden oder Gebäudeteilen eingesetzt werden. Mögliche Einsatzorte wären beispielsweise Kernkraftwerke, Forschungseinrichtungen oder Ähnliches.

Die Erfindung soll anhand eines Ausführungsbeispiels näher erläutert werden. Es zeigt:
Figur 1 eine räumliche Darstellung des geöffneten Strahlenschutztores,
Figur 2 zwei Lamellen mit Bleilappen und
Figur 3 einen Schnitt durch ein Röntgenprüfgerät mit Strahlenschutztoren.

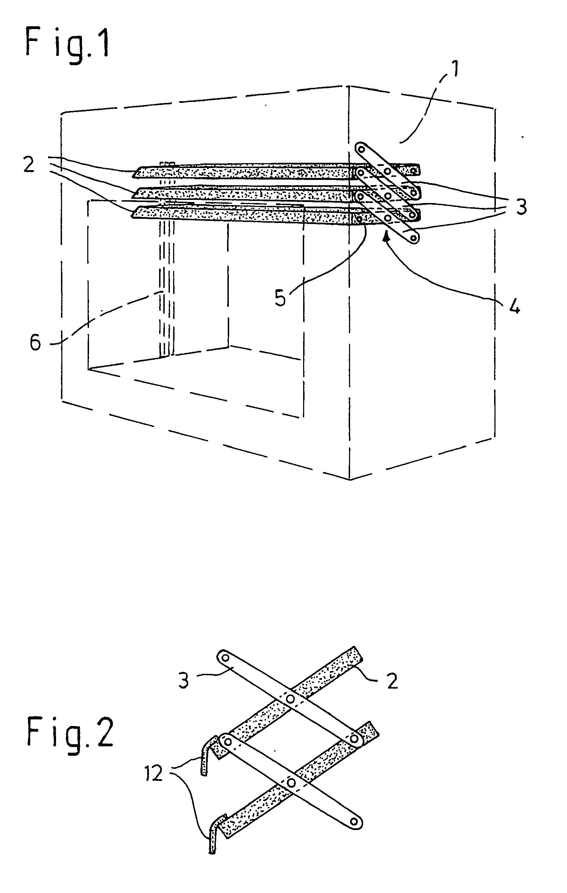

In Figur 1 ist ein Strahlenschutztor in räumlicher Ansicht dargestellt, das sich im vorliegenden Beispiel aus drei Einzelscheren zusammensetzt. Jede Einzelschere besteht aus einer Stirnfläche einer Lamelle 2 und einem Hebel 3, die über ein Scherengelenk 4 miteinander verbunden sind. Über Endgelenke 5 sind die Einzelscheren zu einer Nürnberger Schere zusammengefügt. Aus Stabilitätsgründen befindet sich an beiden Stirnseiten der Lamellen 2 eine Nürnberger Schere. Eine Führungsschiene 6, die an einer oder beiden Seiten des Strahlenschutztores 1 angebracht sein kann, sorgt bei Bedarf für zusätzliche Stabilität und eine Führung beim Öffnen und Schließen des Tores.

Zur Befestigung des Tores bieten sich Punkte im Bereich der obersten Scherengelenke an, da diese üblicherweise ortsfest sind. Die Verstellung des Tores erfolgt vorzugsweise mittels einer motorischen Verstelleinheit, die insbesondere elektrisch oder pneumatisch ausgeführt sein kann. Die verschiedenen Implementierungsmöglichkeiten für derartige Antriebe sind dem Fachmann bekannt und sollen hier nicht näher aufgezählt werden. Besonders vorteilhaft ist die Verwendung einer pneumatischen Verstelleinheit. Wenn diese an einem Scherengelenk im oberen Bereich des Tores angreift, so ergibt sich aufgrund des Prinzips der Nürnberger Schere bei einem geringen Verfahrweg des Pneumatikzylinders ein großer Verfahrweg des untersten Scherengelenks und damit der untersten Lamelle.

Die Lamellen 2 bestehen vorzugsweise aus stark Strahlen absorbierendem Material wie zum Beispiel Densimed. Dies hat den Vorteil, dass deren Herstellung in nur wenigen Schritten erfolgt. Alternativ bestehen die Lamellen aus metallischem Trägermaterial und sind mit Blei beschichtet. Gemäß einer weiteren Alternative bestehen die Lamellen aus nichtmetallischem Trägermaterial und sind Blei beklebt. Dies hat den Vorteil, dass sehr leichtes Trägermaterial verwendet werden kann, das zur weiteren Gewichtsreduktion mit Ausnehmungen versehen ist, die von der Bleischicht überdeckt werden.

In Figur 2 sind zwei Einzelscheren einer Nürnberger Schere herausgegriffen, bei denen die unteren Längsseiten der Lamellen 2 mit flexiblen Bleilappen 12 versehen sind. Ist das Tor geschlossen, so überdecken diese Bleilappen den Übergangsbereich zwischen zwei Lamellen und erhöhen dadurch die Strahlungssicherheit des gesamten Tores.

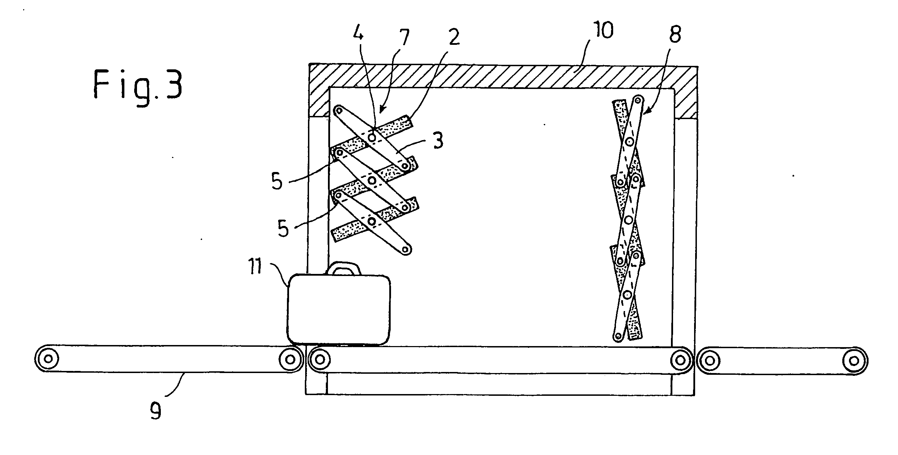

Figur 3 zeigt ein erfindungsgemäßes Röntgenprüfgerät 10 mit einem Strahlenschutztor 7 am Eingang und einem Strahlenschutztor 8 am Ausgang des Strahlentunnels. Das Strahlenschutztor 7 ist teilweise geöffnet, damit das zu untersuchende Objekt 11 über die Transportvorrichtung 9 in das Röntgenprüfgerät 10 eingebracht werden kann. Nachdem das Objekt das Strahlenschutztor 7 passiert hat, verfährt dieses in eine geschlossene Position, wie sie bei Strahlenschutztor 8 dargestellt ist. Die eigentliche Prüfeinheit aus Strahlenquelle und Detektor sowie die Verstelleinheit zum Öffnen und Schließens des Tores sind aus Gründen der Übersichtlichkeit in Figur 3 nicht dargestellt.

In den Zeichnungen ebenfalls nicht zu erkennen sind die Position des Tores erfassende Sensoren. Diese sind vorzugsweise im Bereich der motorischen Verstelleinheit angebracht. Aus der Position des Pneumatikzylinders oder der Stellung eines Elektromotors kann der Öffnungsgrad des Tores bestimmt werden. Mit einem optionalen Endschalter wird geprüft, ob das Tor vollständig geschlossen ist.

Selbstverständlich ist das Strahlenschutztor nicht auf die oben gezeigte Ausgestaltungsform beschränkt. Insbesondere können Anzahl, Form und Anordnung der Lamellen und der anderen Hebel variieren. Auch das Material der Lamellen ist nicht auf die in der Beschreibung genannten beschränkt.

## Patentansprüche

1. Röntgenprüfgerät mit einem Strahlentunnel das am Eingang und am Ausgang des Strahlentunnels ein Strahlenschutztor (1) mit mindestens zwei das Tor (1) bildenden, beweglich angeordneten, Strahlung absorbierenden Lamellen (2) aufweist, **dadurch gekennzeichnet, dass** deren Stirnseiten Hebel darstellen, die nach Art einer Nürnberger Schere verbunden sind.

2. Röntgenprüfgerät (1) nach Anspruch 1, **dadurch gekennzeichnet, dass** die Lamellen (2) aus metallischem Trägermaterial bestehen und mit Blei beschichtet sind.

3. Röntgenprüfgerät (1) nach Anspruch 1, **dadurch gekennzeichnet, dass** die Lamellen (2) aus nichtmetallischem Trägermaterial bestehen und mit Blei beklebt sind.

4. Röntgenprüfgerät (1) nach Anspruch 1, **dadurch gekennzeichnet, dass** die Lamelle (2) aus stark Strahlen absorbierendem Material wie zum Beispiel Densimed bestehen.

5. Röntgenprüfgerät (1) nach einem der Ansprüche 1 bis 4, **dadurch gekennzeichnet, dass** es eine motorische, insbesondere eine elektrische oder pneumatische, Verstelleinheit zum Öffnen und Schließen des Tores aufweist.

6. Röntgenprüfgerät (1) nach einem der Ansprüche 1 bis 5, **dadurch gekennzeichnet, dass** das Tor (1) durch die Verstelleinheit oder manuell öffenbar und durch die Schwerkraft schließbar ist, wobei das Tor (1) in geöffneter Position durch einen Magnet und/oder eine mechanische Haltevorrichtung feststellbar ist.

7. Röntgenprüfgerät (1) nach einem der Ansprüche bis 6, **dadurch gekennzeichnet, dass** es die Größe des zu prüfenden Objekts erfassende Sensoren aufweist.

8. Röntgenprüfgerät (1) nach einem der Ansprüche 1 bis 7, **dadurch gekennzeichnet, dass** es die Position des Tores (1) erfassende Sensoren aufweist.

9. Röntgenprüfgerät (1) nach einem der Ansprüche 1 bis 8, **gekennzeichet durch** einen oder mehrere Bleilappen (12) an mindestens einer Lamelle (2).

10. Verwendung eines Strahlenschutztores mit mindestens zwei das Tor (1) bildenden, beweglich angeordneten, Strahlung absorbierenden Lamellen (2), deren Stirnseiten Hebel darstellen, die nach Art einer Nürnberger Schere verbunden sind, als Strahlenschutztor am Eingang und am Ausgang des Strahlentunnels einer Röntgenprüfanlage.

## Claims

1. X-ray inspection machine with a radiation tunnel that has a radiation-protection gate (1) at the entrance and the exit of the radiation tunnel with at least two lamellae (2) that form the gate (1), are arranged in a movable fashion and absorb radiation, **characterized in that** the end sides thereof constitute levers that are interconnected like a pantograph.

2. X-ray inspection machine (1) according to Claim 1, **characterized in that** the lamellae (2) consist of a metallic base and are coated with lead.

3. X-ray inspection machine (1) according to Claim 1, **characterized in that** the lamellae (2) consist of a non-metallic base and lead is adhered thereon.

4. X-ray inspection machine (1) according to Claim 1, **characterized in that** the lamellae (2) consist of strongly radiation-absorbing material such as e.g. densimet.

5. X-ray inspection machine (1) according to one of Claims 1 to 4, **characterized in that** it has a motorized adjustment unit, in particular an electric or pneumatic adjustment unit, for opening and closing the gate.

6. X-ray inspection machine (1) according to one of Claims 1 to 5, **characterized in that** the gate (1) can be opened by the adjustment unit or by hand and can be closed by gravity, wherein the gate (1) can be fixed in an open position by a magnet and/or a mechanical holding device.

7. X-ray inspection machine (1) according to one of Claims 1 to 6, **characterized in that** it has sensors that record the size of the object to be examined.

8. X-ray inspection machine (1) according to one of Claims 1 to 7, **characterized in that** it has sensors that record the position of the gate (1).

9. X-ray inspection machine (1) according to one of Claims 1 to 8, **characterized by** one or more lead tabs (12) on at least one lamella (2).

10. Use of a radiation-protection gate with at least two lamellae (2) that form the gate (1), are arranged in a movable fashion and absorb radiation, the end sides of which constitute levers that are interconnected like a pantograph, as a radiation-protection gate at the entrance and exit of the radiation tunnel in an X-ray inspection machine.

## Revendications

1. Appareil de contrôle par rayons X équipé d'un tunnel de rayonnement comportant une porte de protection contre le rayonnement (1) à l'entrée et à la sortie du tunnel de rayonnement avec au moins deux lamelles (2) absorbant le rayonnement disposées de façon mobile et formant la porte (1), **caractérisé en ce que** leurs côtés avant forment des leviers reliés à la façon d'une pince à zigzags.

2. Appareil de contrôle par rayons X (1) selon la revendication 1, **caractérisé en ce que** les lamelles (2) sont fabriquées à partir d'un matériau porteur en métal et recouvertes de plomb.

3. Appareil de contrôle par rayons X (1) selon la revendication 1, **caractérisé en ce que** les lamelles (2) sont fabriquées à partir d'un matériau porteur non métallique et collées avec du plomb.

4. Appareil de contrôle par rayons X (1) selon la revendication 1, **caractérisé en ce que** les lamelles (2) se composent d'un matériau absorbant fortement les rayonnements, tel que le Densimed.

5. Appareil de contrôle par rayons X (1) selon l'une quelconque des revendications 1 à 4, **caractérisé en ce qu'**il comporte une unité mobile motorisée, notamment électrique ou pneumatique, pour l'ouverture et la fermeture de la porte.

6. Appareil de contrôle par rayons X (1) selon l'une quelconque des revendications 1 à 5, **caractérisé en ce que** la porte (1) peut être ouverte soit manuellement soit à l'aide de l'unité mobile et être refermée grâce à la gravité, la porte (1) pouvant être maintenue dans la position ouverte par un aimant et/ou un dispositif de retenue mécanique.

7. Appareil de contrôle par rayons X (1) selon l'une quelconque des revendications 1 à 6, **caractérisé en ce qu'**il comporte des capteurs détectant la taille de l'objet à contrôler.

8. Appareil de contrôle par rayons X (1) selon l'une quelconque des revendications 1 à 7, **caractérisé en ce qu'**il comporte des capteurs détectant la position de la porte (1).

9. Appareil de contrôle par rayons X (1) selon l'une quelconque des revendications 1 à 8, **caractérisé par** la présence d'une ou plusieurs languettes en plomb (12) au niveau d'au moins une lamelle (2).

10. Utilisation d'une porte de protection contre le rayonnement équipée d'au moins deux lamelles (2) absorbant le rayonnement disposées de façon mobile et formant la porte (1) dont les côtés avant forment des leviers reliés à la façon d'une pince à zigzags, ladite porte de protection contre le rayonnement étant disposée à l'entrée et à la sortie du tunnel de rayonnement d'une installation de contrôle par rayons X.
